# DEMANDE DE BREVET EUROPEEN

(11) **EP 2 490 071 A1**
(43) Date de publication de la demande: **22.08.2012**
(21) Numéro de dépôt: 12155581.7
(22) Date de dépôt: 15.02.2012
(51) Int. Cl.: G03B 37/04, G03B 5/06, G03B 17/08, G02B 5/10, H04N 5/225

(54) **Dispositif de vidéosurveillance**

(30) Priorité: 16.02.2011 FR 1151274
(71) Demandeur: Hymatom, 34740 Vendargues (FR)
(72) Inventeur: Taillade, Bernard, 34740 Vendargues (FR)
(74) Mandataire: Maupilier, Didier

(57) **Abrégé**

Le dispositif de vidéosurveillance comporte :
- au moins une caméra électronique (105),
- en regard d'au moins une dite caméra, une pluralité de miroirs courbes (115 à 130) présentant des courbures différentes et
- pour chaque caméra en regard d'une pluralité de miroirs courbes, solidaire de ladite caméra, un objectif à bascule (110).

Dans des modes de réalisation, le plan comportant les axes optiques (145, 150) de l'objectif (110) et de la caméra (105) associée passe sensiblement par les centres optiques des miroirs courbes en regard de ladite caméra.

## Description

La présente invention concerne un dispositif de vidéosurveillance. Elle s'applique, en particulier, à la surveillance par caméra électronique, d'une surface étendue, notamment en extérieur.

On connaît des caméras munies d'objectifs de courte longueur focale qui permettent de surveiller un large champ de vision. Cependant, pour les parties éloignées de ce champ de vision, les images manquent de détails et ne permettent pas, par exemple, une levée de doute ou une reconnaissance des individus ou des véhicules.

On connaît aussi des caméras munies d'objectifs de grande longueur focale qui permettent de surveiller un champ de vision étroit et lointain. Cependant, pour les parties proches de ce champ de vision, les images ne présentent pas une vision d'ensemble et ne permettent pas, par exemple, une levée de doute ou une reconnaissance des individus ou des véhicules puisque seule une partie de ces individus ou véhicules sont visualisées.

L'utilisation d'objectifs à focale variable, connus sous le nom d'objectifs « zoom », n'améliorent que légèrement la situation puisqu'ils ne permettent, à un instant donné que d'avoir un champ de vision étroit ou qu'un champ de vision large.

On connaît l'utilisation d'une pluralité de caméras dotées d'objectifs à longueurs focales différentes et/ou réparties sur un site. Cependant, les difficultés de câblage, la multiplication des éléments et la difficulté de présentation des images provenant de ces caméras sur des écrans, rendent le coût de ces systèmes très élevés.

La présente invention vise à remédier à ces inconvénients.

A cet effet, selon un premier aspect, la présente invention vise un dispositif de vidéosurveillance, qui comporte :
- au moins une caméra électronique,
- en regard d'au moins une dite caméra, une pluralité de miroirs courbes présentant des courbures différentes et
- pour chaque caméra en regard d'une pluralité de miroirs courbes, solidaire de ladite caméra, un objectif à bascule.

Grâce à ces dispositions, pour chaque caméra en regard d'une pluralité de miroirs courbes, chaque miroir courbe reflète une partie de la scène avec un agrandissement angulaire différent, ce qui permet de visualiser simultanément différentes parties d'une scène avec des champs de vision angulairement plus étroits pour les parties les plus lointaines et plus large pour les parties les plus proches.

De plus, les images virtuelles des parties de la scène formées par les miroirs courbes, qui se trouvent à différentes distances de la caméra sont vues de manière nette par le capteur de la caméra, grâce à l'utilisation de l'objectif à bascule.

On note qu'en anglais, un objectif à bascule se dit « tilt shift lens ».

Selon des caractéristiques particulières, le plan comportant les axes optiques de l'objectif et de la caméra associée passe sensiblement par les centres optiques des miroirs courbes en regard de ladite caméra.

Grâce à ces dispositions, les déformations d'image sont symétriques sur l'image formée sur le capteur d'image.

Selon des caractéristiques particulières, les centres optiques d'au moins trois miroirs courbes en regard d'une caméra sont alignés, l'axe passant par ces centres optiques intersectant la droite d'intersection du plan de capteur et du plan perpendiculaire à l'axe de l'objectif passant par le centre optique de l'objectif.

Grâce à ces dispositions, l'image formée sur le capteur d'image peut être, en fonction de la configuration de l'objectif, nette pour chacun des champs de vision obtenus par l'intermédiaire des dits miroirs.

Selon des caractéristiques particulières, le positionnement des miroirs courbes est, en regard d'une caméra, tel que les images perçues par réflexion sur les miroirs courbes sont, au moins en partie, nettes sur la surface sensible du capteur de ladite caméra électronique.

La notion et les caractéristiques techniques d'une « image nette » sont bien connues de l'homme du métier. Par exemple, l'encyclopédie en ligne Wikipedia indique, dans son article sur la « focalisation (optique) » :
« La focalisation consiste à obtenir une image nette d'un objet. Le terme « image » est à prendre au sens large d'information caractéristique sur l'objet.

En effet, les informations émises par l'objet (par exemple la lumière qu'il diffuse) partent en général dans tous les sens, elles se « diluent » dans l'espace. Si l'on veut collecter une quantité suffisante d'informations (avoir suffisamment de signal, de luminosité), il faut donc reconcentrer ces informations, en séparant ce qui provient de tel ou tel point de l'objet. C'est là le but de la focalisation. L'image est nette si l'information attribuée à un point de l'objet provient bien de ce point et pas d'un autre. L'image est floue si les informations provenant de plusieurs points se mélangent. »
et
« On voit donc que la focalisation est un compromis entre l'intensité lumineuse et la netteté.
Le fait d'adapter le système pour faire converger au mieux les rayons s'appelle la « mise au point ». D'une manière générale, on arrive à avoir une image nette d'un objet parallèle au plan contenant les deux trous, et il faut adapter la position des miroirs en fonction de la distance de l'objet à la chambre noire. La partie de l'espace donnant une image nette est appelée la « profondeur de champ »

Ainsi, l'homme du métier sait que l'obtention d'une image nette correspond à la focalisation des rayons provenant d'un même objet.

Selon des caractéristiques particulières, les rayons de courbure des miroirs sont, en regard d'une même caméra, en fonction décroissante de la distance entre les miroirs et la caméra.

Grâce à ces dispositions, les images virtuelles des champs de vision obtenus par l'intermédiaire des miroirs sont plus proches que si les rayons de courbure des miroirs étaient, en regard d'une même caméra, en fonction croissante de la distance entre les miroirs et la caméra.

Selon des caractéristiques particulières, les champs de vision de la caméra obtenus par l'intermédiaire d'au moins deux miroirs courbes couvrent des surfaces au sol de largeur sensiblement égales.

Grâce à ces dispositions, la définition des images d'un objet placé au centre de ces champs de vision sont sensiblement égales.

Selon des caractéristiques particulières, le dispositif objet de la présente invention comporte au moins un écran de visualisation et un moyen d'affichage sur ledit écran de l'image captée par une caméra, les surfaces couvertes, sur ledit écran, par les images des champs de vision obtenus par l'intermédiaire des miroirs courbes étant sensiblement égales.

Selon des caractéristiques particulières, les zones d'affichage intermédiaires entre les images des champs de vision obtenus par l'intermédiaire des miroirs courbes sont masquées par un graphisme prédéterminé.

Grâce à ces dispositions, les zones floues représentant les bords des miroirs sont masquées.

Selon des caractéristiques particulières, le dispositif objet de la présente invention comporte un moyen d'inversion de l'image par symétrie par rapport à un axe horizontal ou vertical.

Grâce à ces dispositions, l'inversion réalisée par les miroirs est compensée.

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, et en coupe, des éléments d'un premier mode de réalisation particulier du dispositif objet de la présente invention,
- la figure 2 représente, de face, un miroir mis en oeuvre dans le dispositif illustré en figure 1,
- la figure 3 représente, schématiquement et en vue en élévation, des parties de champ de vision du dispositif illustré en figure 1,
- la figure 4 représente, schématiquement et en vue de dessus, des parties de champ de vision du dispositif illustré en figure 1 et
- la figure 5 représente, schématiquement, un écran de visualisation d'une image fournie par le dispositif illustré en figure 1.

On note que les figures ne sont pas à l'échelle.

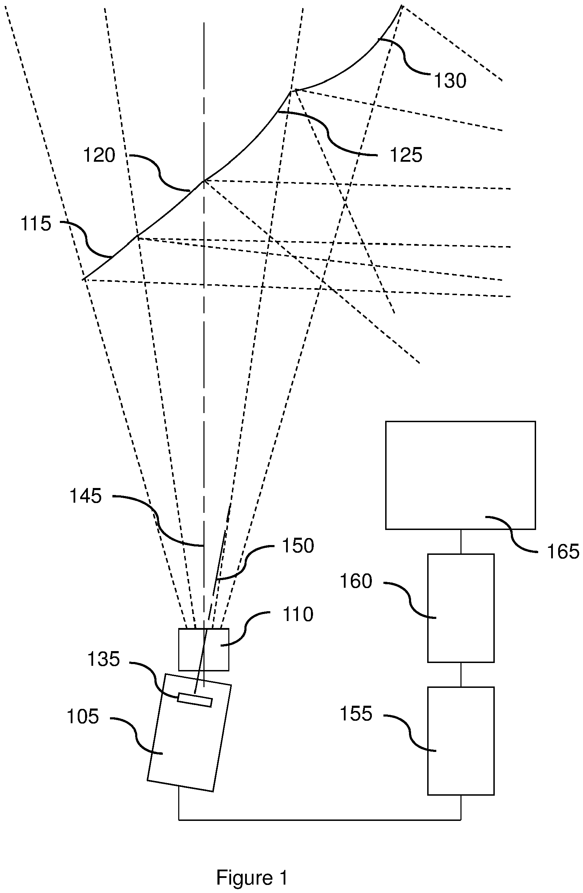

On observe, en figure 1, une caméra 105 munie d'un objectif 110 et, en regard de la caméra 105, quatre miroirs courbes 115, 120, 125 et 130.

La caméra 105 comporte un capteur d'image 135, généralement rectangulaire, dont les points photosensibles, ou « pixels », fournissent un signal électrique représentative de la quantité de lumière qu'ils reçoivent. Pour une caméra couleur, des filtres colorés sont positionnés devant les pixels.

Les miroirs 115 à 130 sont des miroirs courbes, couvrant préférentiellement une portion de sphère. Les rayons de courbure des miroirs 115 à 130 sont différents. Dans le mode de réalisation représenté en figure 1, le miroir le plus lointain de la caméra 105, c'est-à-dire le miroir 130, présente un rayon de courbure plus faible que le rayon de courbure du miroir 125 qui le précède, lui-même plus faible que celui du miroir 120 qui le précède et ainsi de suite. Les angles solides observés par la caméra 105 après réflexion dans les miroirs 115 à 130 sont ainsi différents.

L'objectif 110 possède une longueur focale adaptée à former une image des images virtuelles des champs de vision de la caméra 105 obtenus par l'intermédiaire des miroirs 115 à 130 sur le capteur d'image 135.

Le positionnement des miroirs courbes est, en regard d'une caméra, tel que les images perçues par réflexion sur les miroirs courbes sont, au moins en partie, nettes sur la surface sensible du capteur 135 de la caméra électronique 105. En d'autres termes, le positionnement des miroirs courbes 115 à 130 et de l'objectif de la caméra électronique 105 sont adaptés pour focaliser des rayons provenant du champ de vision et réfléchis sur les miroirs courbes sur la surface sensible du capteur 135 de la caméra électronique. Préférentiellement, ces rayons focalisés correspondent aux centres des différents champs de vision définis par chacun des miroirs courbes 115 à 130.

Comme illustré en figure 1, l'axe optique 145 de l'objectif 110, traditionnellement confondu avec l'axe optique 150 de la caméra 105 forme ici un angle avec l'axe optique de la caméra 150. On dit que l'objectif est « basculé ». Le plan comportant les axes optiques 145 et 150 passe sensiblement par les centres optiques des miroirs 115 à 130, lorsque ceux-ci ont une surface sphérique.

L'angle de basculement entre les axes 145 et 150 est calculé pour que les images perçues par réflexion sur les miroirs 115 à 130 soient, autant que possible, nettes sur la surface sensible du capteur 135. Par approximation, lorsque les centres optiques d'au moins trois des miroirs 115 à 130 sont alignés, l'axe passant par ces centres optiques intersecte préférentiellement la droite d'intersection du plan de capteur et du plan perpendiculaire à l'axe 145 passant par le centre optique de l'objectif 110.

On observe aussi, en figure 1, un écran de visualisation 165, un moyen 160 d'affichage sur ledit écran 165 de l'image captée par une caméra, adapté à ce que les surfaces couvertes, sur ledit écran 165, par les images des champs de vision obtenus par l'intermédiaire des miroirs courbes étant sensiblement égales. Préférentiellement, le moyen d'affichage 160 est adapté à ce que les zones d'affichage intermédiaires entre les images des champs de vision obtenus par l'intermédiaire des miroirs courbes sont masquées par un graphisme prédéterminé. Le dispositif illustré en figure 1 comporte aussi un moyen 155 d'inversion de l'image par symétrie par rapport à un axe horizontal ou vertical, pour compenser la symétrie produite par les miroirs. Le moyen 155 d'inversion reçoit l'image issue de la caméra 105, à la suite d'une transmission filaire ou non filaire et fournit l'image symétrique au moyen d'affichage 160.

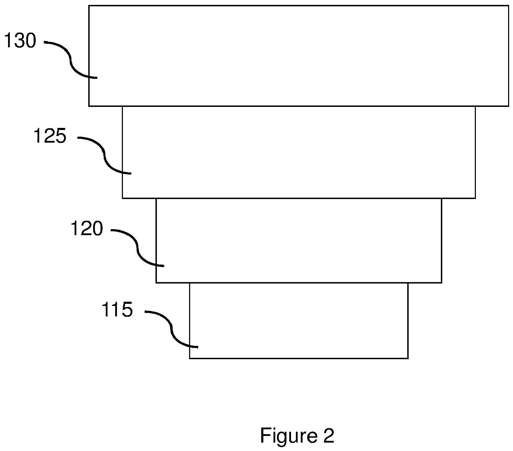

Comme illustré en figure 2, les miroirs courbes 115 à 130 peuvent prendre, en vue de face, une forme essentiellement rectangulaire. Les dimensions de ces rectangles peuvent être différentes pour tenir compte de la distance effective entre l'objectif 110 et le centre de ces rectangles, afin que les champs de vision soient sensiblement identiques. Préférentiellement, les miroirs sont solidaires, par exemple pour avoir été moulés en une seule pièce.

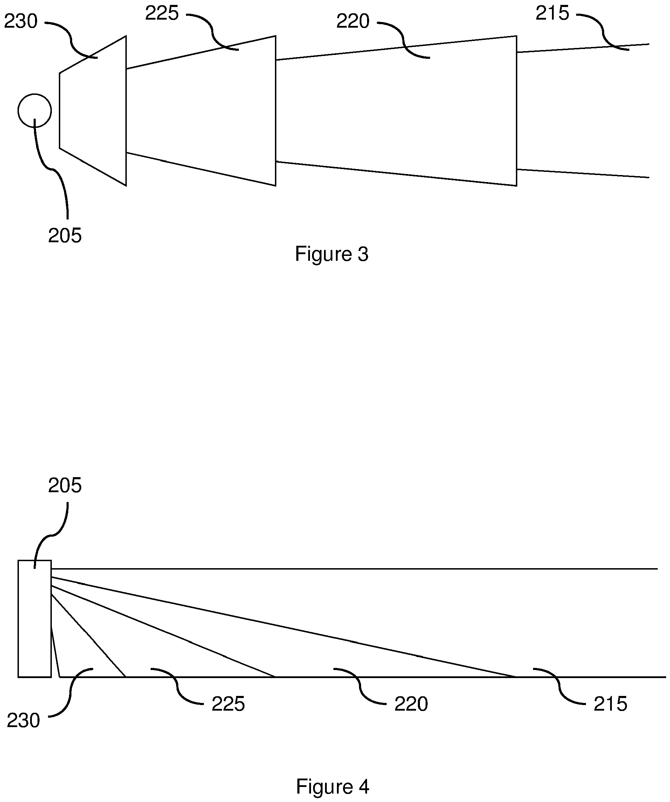

Comme on l'observe en figures 3 et 4, les champs de vision 220 à 230 obtenus respectivement par l'intermédiaire des miroirs 120 à 130 couvrent une largeur (représentée verticalement en figure 3) sensiblement égale entre eux. Cela signifie que l'image d'un objet placé au milieu de chacun des champs de vision 220 à 230 couvre la même surface sur le capteur 135. La définition de l'image de cet objet est ainsi identique au centre de chacun des champs de vision 220 à 230. En ce qui concerne le champ de vision 215, selon qu'il s'étend à l'infini, ou non, la règle indiquée ci-dessus relative à sa largeur et à la définition d'un objet placé en son centre, s'applique ou non.

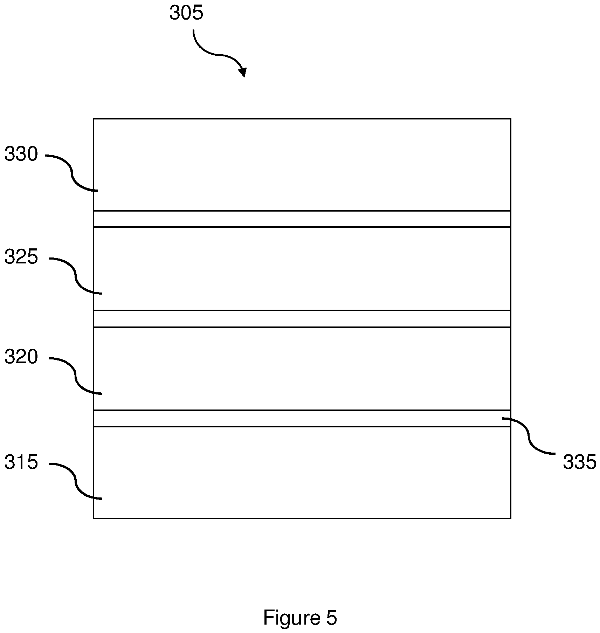

Comme on l'observe en figure 5, sur un écran de visualisation 305, les surfaces couvertes, de haut en bas, par les images 315 à 330 des champs de vision 215 à 230 sont sensiblement égales. Des zones 335 intermédiaires entre ces images sont préférentiellement masquées par un graphisme prédéterminé, par exemple une couleur unie, pour ne pas représenter les zones de liaison entre les miroirs 115 à 130.

Préférentiellement, l'image est inversée pour compenser le retournement dû à la mise en oeuvre de miroirs. En effet, de manière connue en soi, une image dans un miroir inverse les parties droites et gauches.

Dans des modes de réalisation (non représentés), une pluralité de caméras dont au moins une est associée à une pluralité de miroirs courbes sont réparties sur un site.

## Revendications

1. Dispositif de vidéosurveillance, **caractérisé en ce qu'**il comporte :
- au moins une caméra électronique (105),
- en regard d'au moins une dite caméra, une pluralité de miroirs courbes (115 à 130) présentant des courbures différentes et
- pour chaque caméra en regard d'une pluralité de miroirs courbes, solidaire de ladite caméra, un objectif à bascule (110).

2. Dispositif selon la revendication 1, dans lequel le plan comportant les axes optiques (145, 150) de l'objectif (110) et de la caméra (105) associée passe sensiblement par les centres optiques des miroirs courbes en regard de ladite caméra.

3. Dispositif selon l'une des revendications 1 ou 2, dans lequel les centres optiques d'au moins trois miroirs courbes en regard d'une caméra (105) sont alignés, l'axe passant par ces centres optiques intersectant la droite d'intersection du plan du capteur (135) de la caméra et du plan perpendiculaire à l'axe (145) de l'objectif (110) passant par le centre optique de l'objectif.

4. Dispositif selon l'une des revendications 1 à 3, dans lequel le positionnement des miroirs courbes (115 à 130) et de l'objectif de la caméra électronique (105) sont adaptés pour focaliser des rayons provenant du champ de vision et réfléchis sur les miroirs courbes sur la surface sensible du capteur (135) de la caméra électronique.

5. Dispositif selon l'une des revendications 1 à 4, dans lequel les rayons de courbure des miroirs (115 à 130) sont, en regard d'une même caméra (105), en fonction décroissante de la distance entre les miroirs et la caméra.

6. Dispositif selon l'une des revendications 1 à 5, dans lequel, les champs de vision de la caméra obtenus par l'intermédiaire d'au moins deux miroirs courbes (115 à 130) couvrent des surfaces au sol (215 à 230) de largeur sensiblement égales.

7. Dispositif selon l'une des revendications 1 à 6, qui comporte au moins un écran (165) de visualisation et un moyen (160) d'affichage sur ledit écran de l'image captée par une caméra (105), les surfaces couvertes, sur ledit écran, par les images (315 à 330) des champs de vision obtenus par l'intermédiaire des miroirs courbes étant sensiblement égales.

8. Dispositif selon la revendication 7, dans lequel les zones (335) d'affichage intermédiaires entre les images (315 à 330) des champs de vision obtenus par l'intermédiaire des miroirs courbes (115 à 130) sont masquées par un graphisme prédéterminé.

9. Dispositif selon l'une des revendications 7 ou 8, qui comporte un moyen (155) d'inversion d'image par symétrie par rapport à un axe horizontal ou vertical.
